# EUROPEAN PATENT SPECIFICATION

(11) **EP 3 657 949 B1**
(45) Date of publication and mention of the grant of the patent: **04.11.2026**
(21) Application number: 18837342.7
(22) Date of filing: 26.07.2018
(51) Int. Cl.: A01N 59/20, A01N 25/22, A01N 59/26, A01P 1/00, A01P 13/00, A01P 3/00

(54) **PHOSPHORUS ACID AND ALKYLAMINE-STABILIZED COPPER COMPOUND CONTAINING COMPOSITIONS FOR CONTROLLING A PLANT DISEASE CAUSED BY A PHYTOPATHOGENIC ORGANISM**
PHOSPHORSÄURE UND ALKYLAMINAMINSTABILISIERTE KUPFERVERBINDUNG MIT ZUSAMMENSETZUNGEN ZUR BEKÄMPFUNG EINER DURCH EINEN PHYTOPATHOGENEN ORGANISMUS VERURSACHTEN PFLANZENKRANKHEIT
COMPOSITIONS CONTENANT UN COMPOSÉ DE CUIVRE STABILISÉ PAR UN ACIDE PHOSPHOREUX ET UNE ALCANOLAMINE POUR LUTTER CONTRE UNE MALADIE DES PLANTES PROVOQUÉE PAR UN ORGANISME PHYTOPATHOGÈNE

(30) Priority: 26.07.2017 US 201762537111 P
(43) Date of publication of application: 03.06.2020
(60) Divisional application: 26158414.8 / 4 717 090
(73) Proprietor: Nutriag Ltd., Toronto, Ontario M9M 2L8 (CA)
(72) Inventor: TANAKA, Kelly S.E., Toronto Ontario M9A 2M4 (CA); LAW, Siu Ming, Toronto Ontario M4C 5P3 (CA); KANTZAS, Trisevgeni Trissa, Georgetown Ontario L7G 4K7 (CA); BLOOMBERG, Martin David, Toronto Ontario M5N 2S6 (CA)
(74) Representative: HGF
(86) International application number: PCT/CA2018/050912
(87) International publication number: WO 2019/018941

(56) References cited:
- EP-A1- 0 542 071
- WO-A1-2005/051961
- WO-A1-2009/082206
- WO-A1-2013/064798
- WO-A1-2015/089358
- WO-A2-02/060248
- WO-A2-2006/128677
- CA-A1- 2 997 205
- FR-A1- 2 867 026
- US-A- 4 505 734
- US-A- 5 853 766
- US-A1- 2002 193 351
- ANONYMOUS: "Chelation - Wikipedia", 30 May 2017 (2017-05-30), pages 1 - 5, XP055791526, Retrieved from the Internet <URL:https://en.wikipedia.org/w/index.php?title=Chelation&oldid=783030982> [retrieved on 20210330]

## Description

### FIELD

The present application relates to aqueous compositions for controlling a plant disease caused by a phytopathogenic organism, and to uses of such compositions, for example for controlling a plant disease caused by a phytopathogenic organism.

### BACKGROUND

The use of certain compositions comprising copper ions, phosphorous acid and/or salts thereof or mixtures of copper ions and phosphorous acid and/or salts thereof for controlling plant diseases such as those caused by various phytopathogenic fungi and bacteria has been disclosed.

For example, US Patent No. 6,689,392 discloses a composition for controlling growth of pathological organisms on a plant comprising one or more metal ions, one or more chelating agents and phosphorous acid and/or a salt or hydrate thereof. Copper is one example of a list of exemplary metal ions. The chelating agent is a synthetic or natural molecule that binds to metal ions exemplified by ethylenediaminetetraacetic acid (EDTA), ethylenediamine-N,N'-bis(2-hydroxyphenylacetic acid) (EDDHA), N-{2-[bis(carboxymethyl)amino]ethyl}-N-(2-hydroxyethyl)glycine (HEDTA), diethylenetriaminepentaacetic acid (DTPA), citrate, saccharate, gluconate, glucoheptonate and glycine.

US Patent No. 4,075,324 discloses fungicidal compositions containing phosphorous acid, inorganic salts thereof and their use for controlling fungus disease in plants. The inorganic salts can be salts of copper. Exemplary preparation methods comprise isolation of compounds by crystallization or precipitation. In exemplary treatment methods, a wettable powder prepared from such compounds may then be mixed with water to obtain the required dose.

US Patent No. 5,514,200 discloses fertilizers that comprise a buffered composition of an organic acid and salts thereof and a phosphorous-containing acid and salts thereof and optionally further include copper. This patent discloses that when high concentrations of copper are used, the copper is not fully solubilized.

WO 2009/082206 A1 describes a composition comprising a metal compound, a lignosulfonate and phosphorous acid and/or a salt and/or a hydrate and/or an ester thereof and its use as fungicide, bactericide or fertilizer and its use in preventing the formation of a metal phosphite precipitate in an aqueous composition.

### SUMMARY

Mixtures containing high amounts of phosphorous acid in combination with significant amounts of dissolved copper ions near neutral pH may be difficult to stabilize. Aqueous compositions comprising copper ions, phosphorous acid and/or a salt thereof and various amines were not stable at low pH (1-3). In contrast, certain compositions having a pH of from about 6-10 were stable. Stability was also observed to depend, for example, on the relative amounts of the phosphorous acid and/or the salt thereof, the copper ions and the amine in the composition as well as the identity of the amine. For example, when 24 wt% phosphorous acid and 8 wt% of basic copper carbonate were combined with 35 wt% MEA, a precipitate was observed within a few days. In contrast, formulations prepared from 18 wt% phosphorous acid and either 2 wt% or 8 wt% basic copper carbonate as the copper source were stable when an amount of 35 wt% of MEA was added to the composition. The compositions comprising MEA as the amine do not form part of the invention. As another example, a formulation prepared from 18 wt% phosphorous acid and 2 wt% basic copper sulfate with 9 wt% potassium carbonate resulted in an immediate precipitate when only 5 wt% of 1,3-diaminopropane was used. In contrast, a formulation prepared from 18 wt% phosphorous acid and 2 wt% basic copper sulfate with 9 wt% potassium carbonate was observed to be stable for greater than one month when 11 wt% 1,3-diaminopropane was used and a formulation prepared from 18 wt% phosphorous acid and 4 wt% basic copper sulfate was stable for greater than one month when 11 wt% 1,3-diaminopropane was used. Such stability is desirable as shelf life is advantageous for commercial adoption of liquid compositions for controlling a plant disease. In the studies disclosed hereinbelow, various compositions were shown to be active against a variety of common fungal and bacterial plant pathogens.

The invention is set out in the appended claims.

### BRIEF DESCRIPTION OF THE DRAWINGS

Reference is made to the drawings in which:

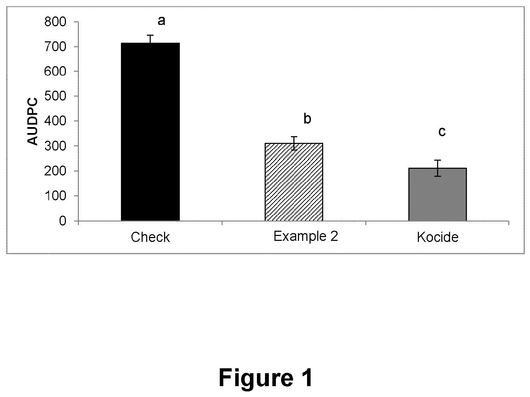

Figure 1 is a plot showing the disease severity in terms of the area under the disease progress curve (AUDPC) for potato plants with Late Blight treated with the formulation of Example 2 (middle, not according to the invention) in comparison to the commercially available Kocide^{™} (dry flowable, 35 wt% metallic copper) formulation (right) and control (left).

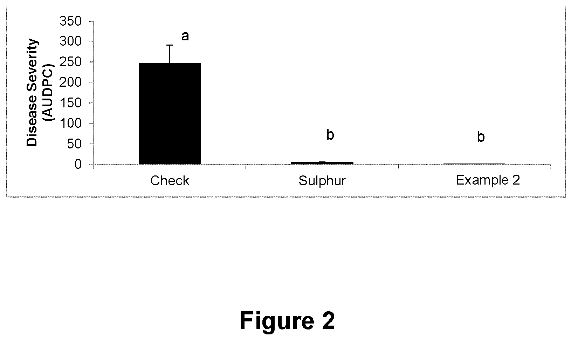

Figure 2 is a plot showing the disease severity in terms of AUDPC for cucumber plants with Powdery Mildew treated with the formulation of Example 2 (right, not according to the invention) in comparison to a commercially available sulphur formulation (middle) and control (left).

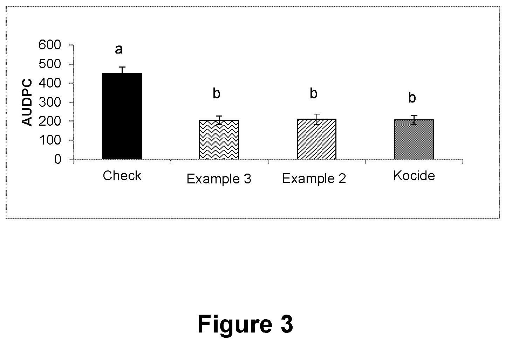

Figure 3 is a plot showing the disease severity in terms of AUDPC for tomato (var. Lunchbox) plants with Bacterial Speck and Spot treated with the formulations of Example 3 (second from left, not according to the invention) and Example 2 (second from right, not according to the invention) in comparison to the commercially available Kocide formulation (far right) and control (far left).

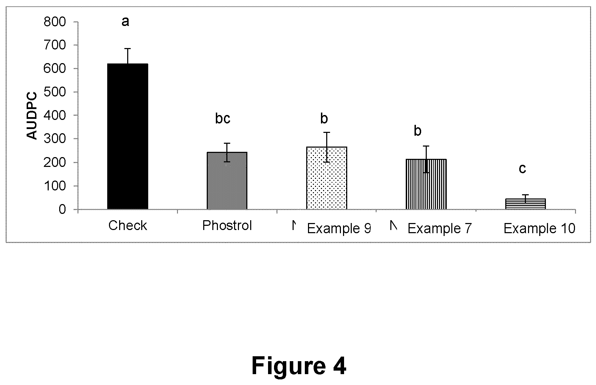

Figure 4 is a plot showing the disease severity in terms of AUDPC for cucumber plants (var. Howden) with Downy Mildew treated with the formulations of Example 9 (middle), Example 7 (second from right) and Example 10 (far right) in comparison to the commercially available Phostrol^{™} (53 wt% mono- and dibasic sodium, potassium, and ammonium phosphites) formulation (second from left) and control (far left).

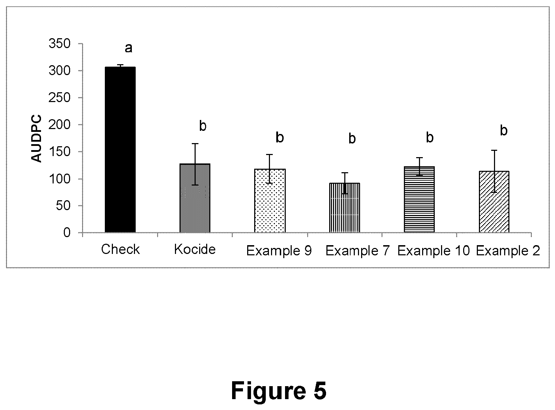

Figure 5 is a plot showing the disease severity in terms of AUDPC for tomato plants with Bacterial Speck and Spot treated with the formulations of Example 9 (third from left), Example 7 (third from right), Example 10 (second from right) and Example 2 (far right, not according to the invention) in comparison to the commercially available Kocide formulation (second from left) and control (far left).

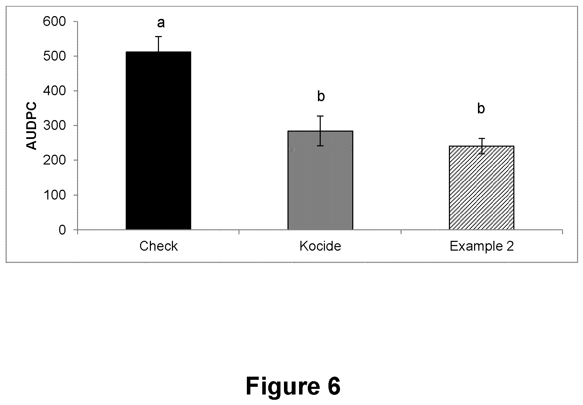

Figure 6 is a plot showing the disease severity in terms of AUDPC for tomato plants with Early Blight treated with the formulations of Example 2 (right, not according to the invention) in comparison to the commercially available Kocide formulation (middle) and control (left).

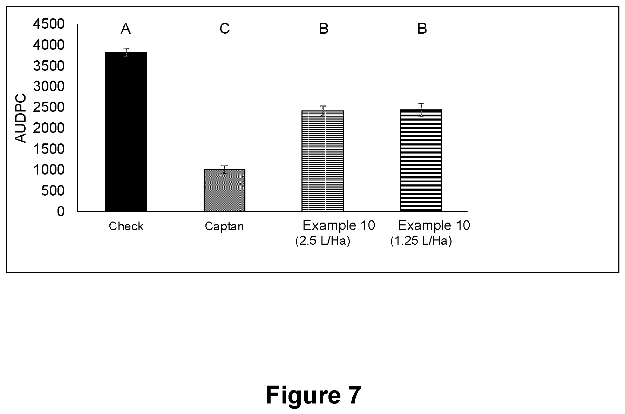

Figure 7 is a plot showing the disease severity in terms of AUDPC for grapes with Downy Mildew treated with the formulations of Example 10 at rates of 2.5 L/Ha (second from right) and 1.25 L/Ha (far right) in comparison to the commercially available Captan^{™} formulation (second from left) and control (far left).

### DETAILED DESCRIPTION

### I. Definitions

Unless otherwise indicated, the definitions and embodiments described in this and other sections are intended to be applicable to all embodiments and aspects of the present application herein described for which they are suitable as would be understood by a person skilled in the art.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. The term "consisting" and its derivatives, as used herein, are intended to be closed terms that specify the presence of the stated features, elements, components, groups, integers, and/or steps, but exclude the presence of other unstated features, elements, components, groups, integers and/or steps. The term "consisting essentially of", as used herein, is intended to specify the presence of the stated features, elements, components, groups, integers, and/or steps as well as those that do not materially affect the basic and novel characteristic(s) of features, elements, components, groups, integers, and/or steps.

Terms of degree such as "substantially", "about" and "approximately" as used herein mean a reasonable amount of deviation of the modified term such that the end result is not significantly changed. These terms of degree should be construed as including a deviation of at least ±5% of the modified term if this deviation would not negate the meaning of the word it modifies.

The term "and/or" as used herein means that the listed items are present, or used, individually or in combination. In effect, this term means that "at least one of" or "one or more" of the listed items is used or present.

As used in this application, the singular forms "a", "an" and "the" include plural references unless the content clearly dictates otherwise. For example, an embodiment including "an alkali metal salt" should be understood to present certain aspects with one alkali metal salt or two or more additional alkali metal salts.

In embodiments comprising an "additional" or "second" component, such as an additional or second alkali metal salt, the second component as used herein is chemically different from the other components or first component. A "third" component is different from the other, first, and second components, and further enumerated or "additional" components are similarly different.

The term "suitable" as used herein means that the selection of the particular compound or conditions would depend on the specific synthetic manipulation to be performed, and the identity of the molecule(s) to be transformed, but the selection would be well within the skill of a person trained in the art. All process/method steps described herein are to be conducted under conditions sufficient to provide the product shown. A person skilled in the art would understand that all reaction conditions, including, for example, reaction solvent, reaction time, reaction temperature, reaction pressure, reactant ratio and whether or not the reaction should be performed under an anhydrous or inert atmosphere, can be varied to optimize the yield of the desired product and it is within their skill to do so.

The term "basic copper sulfate" as used herein refers to a compound having the formula (Cu₄(OH)₆(SO₄))·H₂O.

The term "basic copper carbonate" as used herein refers to a compound having the formula Cu₂CO₃(OH)₂.

The term "phosphorous acid" as used herein refers to a diprotic acid having the formula H₃PO₃ which can ionize up to two protons in aqueous solution. Phosphorous acid is a strong acid with a pKₐ for the first dissociation of about 1.3. The conjugate base of phosphorous acid, the hydrogen phosphite (or phosphonate) ion is a moderately weak acid and has a pKₐ of about 6.7. The conjugate base of the hydrogen phosphite ion, the phosphite (or phosphonate) ion does not have an acidic (readily ionizable) proton. It will be appreciated by a person skilled in the art that the relative abundance of the phosphorous acid, hydrogen phosphite ion and phosphite ion species in an aqueous solution can vary, for example, with the pH of the solution. A person skilled in the art can readily determine the relative concentrations for a given solution.

The term "effective amount" as used herein in reference to an amount of an amine means an amount, when, in combination with the desired amounts of copper ions; phosphorous acid and/or a salt thereof and optional other components in the aqueous composition stabilizes the composition such that no detectable precipitate forms for a time of at least one month, suitably greater than 6 months of storage at ambient temperature and pressure.

The term "detectable" as used herein means as observed using a visual inspection.

The term "organic acid" as used herein refers to an organic compound that is capable of donating a proton, such as a carboxylic acid.

The term "surfactant" as used herein refers to an amphiphilic compound that lowers the surface tension between two liquids and/or between a liquid and a solid; has a structure which includes a hydrophilic head group and a hydrophobic tail group; and includes anionic surfactants and cationic surfactants. The term "anionic surfactant" as used herein refers to a surfactant that contains an anionic functional group at its head such as but not limited to sulfate, sulfonate, phosphate or carboxylate. The term "cationic surfactant" as used herein refers to a surfactant that contains a cationic functional group at its head such as but not limited to a primary, secondary or tertiary amine that becomes positively charged at a pH less than 10 or a quaternary ammonium salt.

The term "micronutrient" as used herein refers to a nutrient needed in very small, or in microgram, quantities for plant growth and/or health (for example, zinc, copper, manganese, iron, molybdenum and boron).

### II. Compositions and Methods of Preparation

Aqueous compositions comprising copper ions, phosphorous acid and/or a salt thereof and various amines were not stable at low pH (1-3). In contrast, certain compositions having a pH of from about 6-10 were stable. Stability was also observed to depend, for example, on the relative amounts of the phosphorous acid and/or the salt thereof, the copper ions and the amine in the composition as well as the identity of the amine.

Accordingly, the present invention includes an aqueous composition for controlling a plant disease caused by a phytopathogenic organism, the composition comprising:
(a) copper ions are in an amount of from 0.5 wt% to about 5 wt% and selected from the list of sources given below;
(b) phosphorous acid and/or a salt in the concentrations given below; and
(c) an effective amount of an alkylamine, selected from the list given below and in specific quantitites;
wherein the pH of the composition is from about 6 to about 10.

In an embodiment, the pH is from about 6 to about 9. In another embodiment, the pH is from about 6.5 to about 7.5.

The copper ions are present in an amount of from about 0.5 wt% to about 5 wt%, based on the total weight of the composition. The copper ions are a source selected from copper chloride, copper hydroxide, copper oxychloride sulfate, copper sulfate, basic copper sulfate, copper carbonate, basic copper carbonate, copper oxide, copper oxychloride and mixtures thereof. In another embodiment, the source of the copper ions is selected from basic copper sulfate, copper hydroxide and basic copper carbonate. In a further embodiment, the source of the copper ions is basic copper sulfate. It is an embodiment that the source of the copper ions is basic copper carbonate. In a further embodiment, the source of copper is copper hydroxide.

The salt of phosphorous acid can be any suitable salt. In an embodiment, the salt is an alkali metal salt of phosphorous acid. In another embodiment, the alkali metal is sodium, potassium or mixtures thereof. In a further embodiment, the salt of phosphorous acid is K₂HPO₃, KNaHPO₃, Na₂HPO₃, KH₂PO₃, NaH₂PO₃ or mixtures thereof. It is an embodiment that the salt of phosphorous acid is K₂HPO₃, KH₂PO₃ or mixtures thereof. In an embodiment, the salt of phosphorous acid is prepared *in situ* by including the phosphorous acid and an alkali metal inorganic base in the composition, wherein the amount of the alkali metal inorganic base is sufficient to form the alkali metal salt of the phosphorous acid and to provide a pH of about 6 to about 10. In some embodiments, the alkali metal inorganic base is selected from potassium carbonate, sodium carbonate, potassium bicarbonate, sodium bicarbonate, potassium hydroxide, sodium hydroxide or mixtures thereof. In some embodiments, the alkali metal inorganic base is potassium carbonate.

In an embodiment, the phosphorous acid and/or the salt thereof is present in an amount of about 22 wt% to about 26 wt%, or about 24 wt%, based on the total weight of the composition; and the amine is diethylenetriamine present in an amount greater than 4 wt% and less than 21 wt%, about 6 wt% to about 15 wt%, or about 7 wt% to about 11 wt%, based on the total weight of the composition. In another embodiment of the present application, the diethylenetriamine is present in an amount of about 9 wt%, based on the total weight of the composition.

In an embodiment, the phosphorous acid and/or the salt thereof is present in an amount of about 22 wt% to about 26 wt%, or about 24 wt%, based on the total weight of the composition; and the amine is 1,3-diaminopropane present in an amount of greater than 7 wt% and less than 15 wt%, or about 10 wt% to about 15 wt%, based on the total weight of the composition. In another embodiment, the 1,3-diaminopropane is present in an amount of about 13 wt%, based on the total weight of the composition.

In an embodiment, herein the phosphorous acid and/or the salt thereof is present in an amount of about 22 wt% to about 26 wt%, or about 24 wt%, based on the total weight of the composition; and the amine is triethylenetetramine present in an amount of about 14 wt% to less than 17 wt%, based on the total weight of the composition.

The compositions of the present application optionally include further components. For example, inorganic bases such as an alkali metal hydroxide (e.g. potassium or sodium hydroxide), an alkali metal carbonate (e.g. potassium or sodium carbonate) or an alkali metal bicarbonate (e.g. sodium or potassium bicarbonate) can be used in combination with the amine to provide a composition with a desired pH and/or to form salts with the phosphorous acid. Accordingly, in some embodiments, the composition further comprises an alkali metal inorganic base such as but not limited to potassium carbonate, sodium carbonate, potassium bicarbonate, sodium bicarbonate, potassium hydroxide, sodium hydroxide or mixtures thereof. In another embodiment, the alkali metal inorganic base is potassium carbonate.

In some embodiments, the compositions of the present application further include one or more additional acids (for example inorganic acids such as phosphoric acid or organic acids such as acetic acid), surfactants (such as suitable anionic or cationic surfactants) and/or micronutrients (such as boron, chlorine, iron, manganese, molybdenum, zinc or mixtures thereof).

In an embodiment, the surfactant is a cationic surfactant. In another embodiment of the present application, the cationic surfactant is cetyltrimethylammonium chloride. The surfactant is present in any suitable amount. In an embodiment, the surfactant is present in an amount of about 0.01 wt% to about 0.1 wt% or about 0.03 wt%, based on the total weight of the composition.

In some embodiments, the composition is prepared by a method comprising mixing the source of copper ions, the amine and optionally, the further components with an aqueous solution comprising the phosphorous acid and/or the salt thereof under conditions to obtain the composition.

Accordingly, the present application also includes an aqueous composition for controlling a plant disease caused by a phytopathogenic organism, the composition prepared by a method comprising mixing a source of copper ions, an amine selected from an alkylamine and an alkanolamine and optionally an alkali metal salt with an aqueous solution comprising phosphorous acid and/or a salt thereof under conditions to obtain the composition.

In some embodiments, the conditions to obtain the composition comprise adding the desired amount of the phosphorous acid and/or the salt thereof to water and stirring for a time until the phosphorous acid is dissolved, adding the desired amount of the source of copper ions to the aqueous solution comprising the phosphorous acid and/or the salt thereof, followed by the amine, and optionally a further base and/or acid until the desired pH is obtained, and optionally adding further components to obtain the composition.

In some embodiments, each addition is stirred for a time and at a temperature (e.g. ambient temperature or about 18°C to about 23°C) until the mixture is dissolved or well dispersed before the next component is added.

### III. Methods for Controlling Plant Diseases and Uses

In the studies disclosed herein below, various compositions of the present application were shown to be active against a variety of common fungal and bacterial plant pathogens.

Accordingly, the present application also includes a method for controlling a plant disease caused by a phytopathogenic organism, the method comprising contacting a plant and/or the soil surrounding the plant with an effective amount of a composition of the present application.

The present application further includes a use of a composition of the present application on a plant and/or the soil surrounding the plant for controlling a plant disease caused by a phytopathogenic organism as well as a composition of the present application for use to control a plant disease caused by a phytopathogenic organism on a plant and/or the soil surrounding the plant.

As used herein, the term "effective amount" as used herein when referring to a method for controlling a plant disease caused by a phytopathogenic organism means an amount of the composition of the present application that is effective, at rates of administration or use and for periods of time necessary to achieve the desired result. For example in the context of controlling the plant disease, an effective amount is an amount that, for example, decreases the disease severity in comparison to the disease severity without the administration or use of the composition of the present application. In an embodiment, effective amounts vary according to factors such as the plant disease and/or identity of the plant, but can nevertheless be routinely determined by one skilled in the art.

Methods for controlling a plant disease or uses comprise contacting the plant and/or the soil surrounding the plant with an effective amount of a composition of the application, optionally consisting of a single administration or use, or alternatively comprising a series of administrations or uses. For example, the composition of the application is administered at least once a week. However, in another embodiment, the plant and/or the soil surrounding the plant is contacted with the composition of the application from about one time per three weeks, or about one time per week to about once daily for a given treatment. The length of the treatment period depends on a variety of factors, such as the identity of the plant disease, the severity of the plant disease, the identity and/or the age of the plant, the concentration of the composition of the application and/or a combination thereof. It will also be appreciated that the effective amount of a composition of the application used for the administration or use may increase or decrease over the course of a particular regime. In some instances, chronic administration or use is required. For example, the composition of the application is administered or used in an amount and for a duration sufficient to control the plant disease caused by the phytopathogenic organism.

The compositions of the present application are for use in any suitable rate, the selection of which can be made by a person skilled in the art. In some embodiments, the compositions of the present application are for use in a rate of from about 1 L/acre to about 3 L/acre (about 2.5 L/Ha to about 7.5 L/Ha) in about 40 to about 300 L of water. In another embodiment, the compositions of the present application are for use in a rate of about 1 L/acre (about 2.5 L/Ha) in about 40 to about 300 L of water.

In some embodiments, the phytopathogenic organism is a phytopathogenic fungus, bacterium, alga or virus.

In an embodiment, the phytopathogenic organism is a phytopathogenic fungus. In an embodiment, the phytopathogenic organism is a phytopathogenic fungus selected from Basidiomycetes, Ascomycetes, Deuteromycetes, Zygomycetes and Oomycetes. In another embodiment, the phytopathogenic fungus is selected from *Alternaria spp., Anisogramma anomala, Ascochyta spp., Blumeria graminis, Blumeriella jaapii, Botryosphaeria spp., Botrytis spp*., *Cercospora spp., Cochliobolus spp., Colletotrichum spp., Cristulariella depraedans, Didymella bryoniae, Elsinoe spp., Erysiphe spp., Fusarium spp., Guignardia spp., Helminthosporium spp., Leptosphaerulina spp., Leveillua taurica, Monilinia spp., Mycosphaerella spp., Neonectria spp., Pseudopeziza spp., Pezicula spp*., *Phaeosphaeria spp., Phomopsis spp., Phyllachora spp., Podosphaera spp., Sclerotinia spp., Septocyta ruborum, Septoria spp. (Mycosphaerella spp.), Taphrina spp., Ulocladium spp., Venturia spp., Wilsonomyces carophilus, Erythricium spp., Exobasidium spp., Gymnosporangium spp., Hemileia vastatrix, Phoma spp., Phragmidium spp., Rhizoctonia spp., Puccinia spp., Mucor spp., Ustilago spp., Tilletia spp., Uromyces spp., Phakopsora spp., Sphaerotheca spp., Uncinula spp., Rhynchosporium spp., Pyrenophora spp., Cercosporella herpotrichoides, Pyricularia oryzae, Sclerotium spp. (Typhula spp.), Albugo spp., Phytophthora spp., Pythium spp., Plasmopara viticola, Peronospora spp., Pseudoperonospora cubensis, Sclerophthora spp*.*, Spilocaea oleaginea* and *Bremia lactucae.*

In an embodiment, the phytopathogenic organism is a phytopathogenic bacterium. In another embodiment, the phytopathogenic organism is a phytopathogenic bacterium selected from *Xanthomonas spp., Pseudomonas spp., Pantoea spp., Erwinia amylovora and Acidovorax spp.*

In a further embodiment, the phytopathogenic organism is a phytopathogenic virus. In another embodiment of the present application, the phytopathogenic organism is tobacco mosaic virus (TMV).

In an embodiment, the phytopathogenic organism is a phytopathogenic green alga. In another embodiment, the phytopathogenic green alga is selected from *Cephaleuros spp.*

In an embodiment, the plant is selected from cereals, fruit plants, nut trees, citrus trees, legumes, tubers, vegetables, cucurbitaceae, oleaginous plants, tobacco, coffee, tea, cocoa, sugar beet, sugar cane, herbs, hops, ginseng, grasses and cotton. In another embodiment:
the cereals are selected from wheat, barley, rye, oats, rice, maize and sorghum;
the fruit plants are selected from almond, apples, avocado, pears, plums, peaches, cherries, bananas, grapes, strawberries, cranberries, apricots, nectarines, kiwis, mangos, pineapples, olives, blueberries and cane berries (e.g. raspberries or blackberries);
the nut trees are selected from pistachio, walnut and pecan;
the citrus trees are selected from oranges, lemons, mandarins and grapefruit;
the legumes are selected from beans, peas, lentils and soybean;
the tubers are selected from potatoes, beets and sugar beets;
the vegetables are selected from leafy greens (e.g. spinach or lettuce), asparagus, celery, brassica (e.g. cabbage, broccoli, cauliflower, Brussels sprouts or mustard), carrots, onions, tomatoes, eggplants, garlic and peppers;
the cucurbitaceae are selected from squash, pumpkins, zucchini, cucumbers, melons and watermelons;
the herbs are selected from chives and dill;
the grass is alfalfa; and
the oleaginous plants are selected from sunflower, rapeseed, canola, peanut, castor and coconut.

### EXAMPLES

### Examples 1-16: Formulations

### I. Materials and Methods

*General Procedure:* Water was added to a vessel then the desired amount of phosphorous acid was added and stirring continued until completely dissolved. Once fully dissolved, the desired amount of the copper source was added, followed by the amine until the desired pH was obtained. A further base or acid was optionally added to adjust the pH to the desired range. Table 1 lists the compositions of various formulations which were tested.

### II. Results and Discussion

As can be seen from Examples 1-4 in Table 1 (not according to the invention), various formulations wherein the amine was MEA were observed to be stable for greater than 6 months. For example, formulations prepared from 18 wt% phosphorous acid and either 2 wt% or 8 wt% basic copper carbonate as the copper source were stable when an amount of 35 wt% of MEA was added to the composition. In contrast, when 24 wt% phosphorous acid and 8 wt% of basic copper carbonate were combined with 35 wt% MEA, a precipitate was observed within a few days.

As another example, a formulation prepared from 24 wt% phosphorous acid, 2 wt% basic copper carbonate as the copper source and 11 wt% potassium carbonate was observed to be stable for greater than one month when 9 wt% diethylenetriamine was used but resulted in an immediate precipitate when only 4 wt% of the diethylenetriamine was used and a precipitate after a few days when 21 wt% of diethylenetriamine was used.

Formulations prepared from 18 wt% phosphorous acid, 2 wt% basic copper carbonate as the copper source and either 7 wt% triethylenetetramine and 8 wt% potassium carbonate (with or without 0.03% cetyltrimethylammonium chloride) or 14 wt% triethylenetetramine were stable for over 6 months. Formulations prepared from 24 wt% phosphorous acid, 2 wt% basic copper carbonate or 2 wt% basic copper sulfate as the copper source and 11 wt% potassium carbonate were stable for greater than 5 or 6 months when 14 wt% triethylenetetramine was used. In contrast, when 24 wt% phosphorous acid, 2 wt% basic copper carbonate as the copper source, 11 wt% potassium carbonate and 10 wt% or 17 wt% triethylenetetramine was used, the formulations were found to be unstable and a precipitate formed overnight/within a few days.

A formulation prepared from 18 wt% phosphorous acid and 2 wt% basic copper sulfate with 9 wt% potassium carbonate was observed to be stable for greater than one month when 11 wt% 1,3-diaminopropane was used. Similarly, a formulation prepared from 18 wt% phosphorous acid and 4 wt% basic copper sulfate was stable for greater than one month when 11 wt% 1,3-diaminopropane was used. In contrast, a formulation prepared from 18 wt% phosphorous acid and 2 wt% basic copper sulfate with 9 wt% potassium carbonate resulted in an immediate precipitate when only 5 wt% of 1,3-diaminopropane was used.

As another example, a formulation prepared from 24 wt% phosphorous acid, 2 wt% basic copper sulfate with 9 wt% potassium carbonate was stable for greater than 2 months when 13 wt% 1,3-diaminopropane was used. When 7 or 15 wt% 1,3-diaminopropane was used with 24 wt% phosphorous acid, 2 wt% basic copper sulfate and 9 wt% potassium carbonate the formulations precipitated within 24 hours. When basic copper carbonate was used as the copper source, at 7 wt% amine the formulation was unstable and at 21 wt% amine the formulation was observed to be gel like.

As another example, a formulation prepared from 18 wt% phosphorous acid, 1.6 wt% copper hydroxide with 8.4 wt% potassium carbonate was stable for greater than 1 week when 11 wt% ethylenediamine was used.

When ammonium hydroxide was used as the amine, a formulation prepared from 24 wt% phosphorous acid, 2 wt% basic copper carbonate, 33 wt% amine and 11 wt% potassium carbonate was stable for a few months before a precipitate was observed. All other formulations tested using ammonium hydroxide as the amine were observed to result in a precipitate within a few days.

### Example 17: Treatment of Late Blight Disease in Potatoes (not according to the invention)

### I. Materials and Methods

The trial was conducted in a randomized complete block design (RCBD) in a field setting. 5 applications were made; on Aug. 10, Aug. 18, Aug. 25, Sept. 3 and Sept. 12, 2015. Assessments were made on Aug 18, Aug 25, Sept 3 and Sept 12, 2015 to determine disease pressure and phytotoxicity.

Treatments: Check (control; no treatment applied), Kocide^{™} 2000 (1 kg/Ha), Example 2 (2.5 L/Ha). 200 L/Ha spray volume.

### II. Results and Discussion

Figure 1 shows the disease severity in terms of the area under the disease progress curve (AUDPC) for potato plants with Late Blight (caused by the fungus-like oomycete *Phytophthora infestans*) treated with the formulation of Example 2 (middle) in comparison to the commercially available Kocide formulation (right) and control (left). As can be seen from Figure 1, the potato plants treated with the formulation of Example 2 had a disease severity of Late Blight which was significantly less than that of the control. There was seen to be some phytotoxicity (10%) with the Kocide treatment and to a much lesser extent a small amount of leaf curl was seen with the Example 2 formulation.

### Example 18: Treatment of Powdery Mildew in Cucumber (not according to the invention)

### I. Materials and Methods

The trial was conducted in a RCBD in a greenhouse. Seeds were planted Feb 4. Applications were made weekly starting when the plants were 8 inches tall (Feb. 24, and March 3, 13, and 21, 2014). Assessments were made on March 13, 23, and 31, 2014 to determine disease pressure.

Treatments: Check (control; no treatment applied), Example 2 (2.5 L/Ha), Sulfur (Microthiol^{™} at 2.25 kg/Ha).

### II. Results and Discussion

Figure 2 shows the disease severity in terms of the AUDPC for cucumber plants with powdery mildew (caused by the fungus *Podosphaera xanthii*) treated with the formulation of Example 2 (right) in comparison to the commercially available Microthiol sulphur formulation (middle) and control (left). As can be seen from Figure 2, the cucumber plants treated with the formulation of Example 2 had an AUDPC of approximately zero.

### Example 19: Treatment of Bacterial Speck and Spot in Tomatoes (not according to the invention)

### I. Materials and Methods

The trial was conducted in a RCBD in a field setting. 4 applications were made on Jun. 19, Jun. 26, Jul. 3, and Jul. 10, 2016. Assessments were made on Jun. 19, Jun. 26, Jul. 3, and Jul. 10, 2016 to determine disease pressure and phytotoxicity.

Treatments: Check (control; no treatment applied), Examples 2 and 3 were applied at 2.5 L/Ha, Kocide was applied at 1 kg/Ha. 200 L/Ha spray volume.

### II. Results and Discussion

Figure 3 shows the disease severity in terms of AUDPC for tomato (var. Lunchbox) plants with Bacterial Speck (caused by the bacterium *Pseudomonas syringae* pv. *tomato*) and Spot (caused by the bacterium *Xanthomonas campesiris* pv*., vesicatoria*) treated with the formulations of Example 3 (second from left) and Example 2 (second from right) in comparison to the commercially available Kocide formulation (far right) and control (far left). As can be seen from Figure 3, tomato plants treated with the formulations of Example 2 and Example 3 had a disease severity of Bacterial Speck and Spot which was significantly less than that of the control. All treatments had less than 5% incidence of phytotoxicity.

### Example 20: Treatment of Downy Mildew in Cucumbers

### I. Materials and Methods

The trial was conducted in a RCBD in a greenhouse. 5 applications of spray were made on Nov. 27, Dec. 4, Dec. 11, Dec. 18 and Dec 25, 2016. Assessments were made on Dec. 4, Dec. 11, Dec. 18, Dec. 25 and Dec. 29, 2014 for disease pressure and phytotoxicity.

Treatments: Check (control; no treatment applied), Phostrol^{™} (1 L/Ha), Examples 7, 9 and 10 (2.5 L/Ha). 100 L/Ha spray volume.

### II. Results and Discussion

Figure 4 shows the disease severity in terms of AUDPC for cucumber plants (var. Howden) with Downy Mildew (caused by the fungus-like oomycete *Pseudoperonospora cubensis* treated with the formulations of Example 9 (middle), Example 7 (second from right) and Example 10 (far right) in comparison to the commercially available Phostrol^{™} formulation (second from left) and control (far left). As can be seen from Figure 4, cucumber plants treated with the formulations of Examples 7, 9 and 10 had a disease severity of Downy Mildew which was significantly less than that of the control, the formulation of Example 10 having the lowest level for disease severity of all formulations tested. The phytotoxicity was found to be 9.7% for Phostrol and 0% for Example 10, the latter being indistinguishable from the control.

### Example 21: Treatment of Bacterial Speck and Spot in Tomatoes

### I. Materials and Methods

The trial was conducted in the Greenhouse. 5 applications were made on Nov 27, Dec 4, Dec 11, Dec 18 and Dec 25, 2014. Assessments were made on Dec 4, Dec 11, Dec 18, and Dec 25, 2014 to determine disease pressure and phytotoxicity.

Treatment: Check (control; no treatment applied), Kocide (2.52 kg/Ha), Examples 2, 7, 9 and 10 (2.5 L/Ha). 200 L/Ha spray volume.

### II. Results and Discussion

Figure 5 shows the disease severity in terms of AUDPC for tomato plants with Bacterial Speck and Spot treated with the formulations of Example 9 (third from left), Example 7 (third from right), Example 10 (second from right) and Example 2 (far right) right, not according to the invention) in comparison to the commercially available Kocide formulation (second from left) and control (far left). As can be seen from Figure 5, tomato plants treated with the formulations of Examples 2, 7, 9 and 10 had a disease severity of Bacterial Speck and Spot which was significantly less than that of the control, the formulation of Example 7 having the lowest level for disease severity of all formulations tested. Kocide had 3.8% phytotoxicity, Example 2 was lower at 1.3% and Examples 7, 9 and 10 had no phytotoxicity.

### Example 22: Treatment of Early Blight in Tomatoes (not according to the invention)

### I. Materials and Methods

The trial was conducted in a RCBD in a field setting. 5 applications were made on Aug 4, Aug 11, Aug 18, Aug 24, and Sept 1, 2014. Assessments were made on Aug 8, Aug 15, Aug 22, Aug 29, and Sept 5, 2014 to determine disease pressure and toxicity.

Treatments: Check (control; no treatment applied), Kocide 3000 (2.5 kg/Ha), Example 2 (2.5 L/Ha). 200 L/Ha spray volume.

### II. Results and Discussion

Figure 6 shows the disease severity in terms of AUDPC for tomato plants with Early Blight (caused by the fungus *Alternaria solani*) treated with the formulations of Example 2 (right), in comparison to the commercially available Kocide formulation (middle) and control (left). As can be seen from Figure 6, tomato plants treated with the formulation of Example 2 had a disease severity of Early Blight which was significantly less than that of the control. No phytotoxicity was seen in any treatment.

### Example 23: Treatment of Downy Mildew in Grapes

### I. Materials and Methods

The trial was conducted in a RCBD in a field setting. 5 applications were made on June 24, July 2, July 16, July 24, and August 8, 2015. Assessments were made on June 24, July 2, July 16, July 24, August 8, August 18, August 28, and September 15, 2015 to determine disease pressure and yield.

Treatments: Check (control; no treatment applied), Captan (1 kg/Ha), Example 10 (2.5 L/Ha), Example 10 (1.25 L/Ha). 800 L/Ha spray volume.

### II. Results and Discussion

Figure 7 shows the disease severity in terms of AUDPC for grapes with Downy Mildew (caused by the fungus-like oomycete *Plasmopara viticola*) treated with the formulation of Example 10 at rates of 2.5 L/Ha (second from right) and 1.25 L/Ha (far right) in comparison to the commercially available Captan^{™} formulation (second from left) and control (far left). As can be seen from Figure 7, cucumber plants treated with the formulations of Example 10 had disease severity of Downy Mildew which was significantly less than that of the control. There was no difference in yield among all treatments.

**Table 1**

| **No.** | **H₃PO₃ (wt%)** | **Copper** | | **Amine** | | **K₂CO₃ (wt%)** | **H₂O wt%** | **Total %** | **pH** | **Stability** |
|---|---|---|---|---|---|---|---|---|---|---|
| | | **Source** | **Amt wt%** | **Identity** | **Amt wt%** | | | | | |
| 1 | 12 | basic carbonate | 7 | MEA | 30 | - | 51 | 100 | 9.9 | > 6 months |
| 2 | 18 | basic carbonate | 2 | MEA | 35 | - | 45 | 100 | 10.1 | > 6 months |
| 3 | 18 | basic carbonate | 8 | MEA | 35 | - | 39 | 100 | 9.5 | > 6 months |
| 4 | 18 | sulfate | 4 | MEA | 35 | - | 43 | 100 | 9.7 | > 6 months |
| Comp Ex. 1 | 24 | basic carbonate | 8 | MEA | 35 | - | 33 | 100 | 8.8 | ppt within a few days |
| 5 | 24 | basic carbonate | 2 | EDTEA | 8 2 | 9 | 55 | 100 | 6.9 | > 6 months |
| Comp Ex. 2 | 24 | basic carbonate | 2 | DETA | 4 | 11 | 59 | 100 | ND* | immediate ppt |
| 6 | 24 | basic carbonate | 2 | DETA | 9 | 11 | 54 | 100 | 6.4 | > 1 month |
| Comp Ex. 3 | 24 | basic carbonate | 2 | DETA | 21 | 11 | 42 | 100 | 9.9 | ppt after a few days |
| 7 | 18 | basic carbonate | 2 | TETA | 7 | 8 | 65 | 100 | 6.7 | > 6 months |
| 8 | 18 | basic carbonate | 2 | TETA | 7 | 8 | 65 | 100** * | 6.7 | > 6 months |
| 9 | 18 | basic carbonate | 2 | TETA | 14 | - | 66 | 100 | 7.1 | > 6 months |
| Comp Ex. 4 | 24 | basic carbonate | 2 | TETA | 10 | 11 | 53 | 100 | 6.2 | ppt after a few days |
| 10 | 24 | basic carbonate | 2 | TETA | 14 | 11 | 49 | 100 | 6.6 | > 6 months |
| 11 | 24 | basic sulfate | 2 | TETA | 14 | 11 | 49 | 100 | 6.6 | > 5 months |
| Comp Ex. 5 | 24 | basic carbonate | 2 | TETA | 17 | 11 | 46 | 100 | 7.5 | ppt overnight |
| 12 | 18 | basic sulfate | 2 | DAP | 5 | 9 | 66 | 100 | ND* | immediate ppt |
| 13 | 18 | basic sulfate | 2 | DAP | 11 | 9 | 60 | 100 | 7.8 | > 1 month |
| 14 | 18 | basic sulfate | 4 | DAP | 11 | - | 67 | 100 | 6.5 | > 1 month |
| Comp Ex. 6 | 24 | basic carbonate | 2 | DAP | 7 | 9 | 58 | 100 | ND* | immediate ppt |
| Comp Ex. 7 | 24 | basic sulfate | 2 | DAP | 7 | 9 | 58 | 100 | 6.8 | ppt after 1 day |
| 15 | 24 | basic sulfate | 2 | DAP | 13 | 9 | 52 | 100 | 7.6 | > 2 months |
| Comp Ex. 8 | 24 | basic sulfate | 2 | DAP | 15 | 9 | 50 | 100 | ND* | immediate ppt |
| Comp Ex. 9 | 24 | basic carbonate | 2 | DAP | 21 | 9 | 44 | 100 | ND* | gel like |
| Comp Ex. 10 | 24 | basic carbonate | 2 | NH₄OH | 11 | 11 | 52 | 100 | ND* | immediate ppt |
| Comp Ex. 11 | 24 | basic carbonate | 2 | NH₄OH | 22 | 11 | 41 | 100 | 6.7 | ppt after 3 days |
| Comp Ex. 12 | 24 | basic carbonate | 2 | NH₄OH | 26 | 11 | 33 | 100** | 7.5 | ppt after 2 days |
| Comp Ex. 13 | 24 | basic sulfate | 2 | NH₄OH | 26 | 11 | 33 | 100** | 6.6 | ppt after 1 day |
| 16 | 24 | basic carbonate | 2 | NH₄OH | 33 | 11 | 30 | 100 | 7.8 | ppt after a few months |
| Comp Ex. 14 | 24 | sulfate | 4 | NH₄OH | 33 | 11 | 28 | 100 | ND* | immediate ppt |
| Comp Ex. 15 | 28 | basic carbonate | 7 | - | - | - | 65 | 100 | 1.1 | ppt after 2 days |
| 17 | 18 | copper hydroxide | 1.6 | EDA | 11 | 8.4 | 61 | 100 | 7.17 | no ppt after 1 week |

| | | | | | | | | | | |
|---|---|---|---|---|---|---|---|---|---|---|
| * not determined ** also contains 4 wt% acetic acid *** also contains 0.03% cetyltrimethylammonium chloride EDTEA = ethylene diamine triethylenetetramine DETA = diethylenetriamine TETA = triethylenetetramine DAP = 1,3-diaminopropane EDA = ethylene diamine | | | | | | | | | | |

## Claims

1. An aqueous composition for controlling a plant disease caused by a phytopathogenic organism, the composition comprising:
(a) copper ions, wherein the copper ions are present in an amount of from about 0.5 wt% to about 5 wt%, based on the total weight of the composition and the copper ions are from a source selected from copper chloride, copper hydroxide, copper oxychloride sulfate, copper sulfate, basic copper sulfate, copper carbonate, basic copper carbonate, copper oxide, copper oxychloride, copper ethylenediaminetetraacetic acid (EDTA) and mixtures thereof, wherein the term "basic copper sulfate" as used herein refers to a compound having the formula (Cu₄(OH)₆(SO₄)).H₂O, and the term "basic copper carbonate" as used herein refers to a compound having the formula Cu₂CO₃(OH)₂, preferably
wherein the source of the copper ions is selected from basic copper sulfate, copper hydroxide and basic copper carbonate;
(b) phosphorous acid and/or a salt thereof; and
an alkylamine
wherein
the phosphorous acid and/or a salt thereof is present in an amount of from about 22 wt% to about 26 wt%, and
the alkylamine is triethylenetetramine present in an amount of about 14 wt% to less than 17 wt%; or
the phosphorous acid and/or a salt thereof is present in an amount from about 22 wt% to about 26 wt%, and the alkyl amine is diethylenetriamine present in an amount of greater than 4 wt% and less than 21 wt%, or
the phosphorous acid and/or a salt thereof is present in an amount from about 22 wt% to about 26 wt%, and the alkylamine is 1,3-diaminopropane present in an amount of greater than 7 wt% and less than 15 wt%, or
or wherein
the phosphorous acid and/or a salt thereof is present in an amount of about 18 wt%, and the alkylamine is ethylenediamine present in an amount of about 10 wt% to about 15 wt% wherein the composition comprises about 1 wt% to about 3 wt% of copper hydroxide, or
the phosphous acid is present in an amount of about 18 wt%, wherein the composition comprises about 2 wt% of basic copper carbonate, alkylamine is triethylenetetramine present in an amount of about 7 wt% or about 14 wt%, wherein if triethylenetetramine present in an amount of about 7 wt% then potassium carbonate is present in an amount of about 8 wt%; or
the phosphous acid is present in an amount of about 18 wt%, wherein the composition comprises about 2 wt% of basic copper sulfate with 9 wt% potassium carbonate, the alkylamine is 1,3-diaminopropane present in an amount of about 11 wt%; or the phosphous acid is present in an amount of about 18 wt%, wherein the composition comprises about 4 wt% of basic copper carbonate, the alkylamine is 1,3-diaminopropane present in an amount of about 11 wt%; and
wherein the pH of the composition is from about 6 to about 10 and all wt% are based on the total weight of the composition, wherein the term "about" means +/- 5% of the modified value.

2. The composition of claim 1, wherein the composition comprises a salt of phosphoric acid and the salt of phosphoric acid is an alkali metal salt of phosphorous acid.

3. The composition of claim 2, wherein the alkali metal salt of phosphorous acid is K₂HPO₃, KNaHPO₃, Na₂HPO₃, KH₂PO₃, NaH₂PO₃ or mixtures thereof.

4. The composition of any one of claims 1 to 3, wherein:
the phosphorous acid and/or the salt thereof is present in an amount of about 24 wt%, based on the total weight of the composition; and
the alkylamine is 1,3-diaminopropane present in an amount of about 10 wt% to about 15 wt%, based on the total weight of the composition.

5. The composition of claim 4, wherein the 1,3-diaminopropane is present in an amount of about 13 wt%, based on the total weight of the composition.

6. The composition of any one of claims 1 to 3, wherein:
the phosphorous acid and/or the salt thereof is present in an amount of about 24 wt%, based on the total weight of the composition; and
the alkylamine is triethylenetetramine present in an amount of about 14 wt% and less than 17 wt%, based on the total weight of the composition.

7. The composition of claim 6, wherein the triethylenetetramine is present in an amount of about 14 wt%, based on the total weight of the composition.

8. The composition of claim 6, wherein the composition further comprises about 11 wt%, based on the total weight of the composition, of potassium carbonate.

9. The composition of any one of claims 1 to 8 wherein:
the phosphorous acid and/or the salt thereof is present in an amount of about 24 wt%, based on the total weight of the composition; and
the alkylamine is diethylenetriamine present in an amount greater than 7 wt% and less than 21 wt%, based on the total weight of the composition

10. The composition of claim 9, wherein the diethylenetriamine is present in an amount of about 9 wt%, based on the total weight of the composition.

11. A method for controlling a plant disease caused by a phytopathogenic organism, the method comprising contacting a plant and/or the soil surrounding the plant with an effective amount of a composition as defined in any one of claims 1 to 10.

12. The method of claim 11, wherein the phytopathogenic organism is a phytopathogenic fungus, bacterium, alga or virus.

13. The method of claim 12, wherein the phytopathogenic organism is a phytopathogenic fungus selected from Basidiomycetes, Ascomycetes, Deuteromycetes, Zygomycetes and Oomycetes, preferably wherein the phytopathogenic fungus is selected from *Alternaria spp., Anisogramma anomala, Ascochyta spp., Blumeria graminis, Blumeriella jaapii, Botryosphaeria spp., Botrytis spp., Cercospora spp., Cochliobolus spp., Colletotrichum spp., Cristulariella depraedans, Didymella bryoniae, Elsinoe spp., Erysiphe spp., Fusarium spp., Guignardia spp., Helminthosporium spp., Leptosphaerulina spp., Leveillua taurica, Monilinia spp., Mycosphaerella spp., Neonectria spp., Pseudopeziza spp., Pezicula spp., Phaeosphaeria spp., Phomopsis spp., Phyllachora spp., Podosphaera spp., Sclerotinia spp., Septocyta ruborum, Septoria spp. (Mycosphaerella spp.), Taphrina spp., Ulocladium spp., Venturia spp., Wilsonomyces carophilus, Erythricium spp., Exobasidium spp., Gymnosporangium spp., Hemileia vastatrix, Phoma spp., Phragmidium spp., Rhizoctonia spp., Puccinia spp., Mucor spp., Ustilago spp., Tilletia spp., Uromyces spp., Phakopsora spp., Sphaerotheca spp., Uncinula spp., Rhynchosporium spp., Pyrenophora spp., Cercosporella herpotrichoides, Pyricularia oryzae, Sclerotium spp. (Typhula spp.), Albugo spp., Phytophthora spp., Pythium spp., Plasmopara viticola, Peronospora spp., Pseudoperonospora cubensis, Sclerophthora spp., Spilocaea oleaginea* and *Bremia lactucae.*

14. The method of claim 12, wherein the phytopathogenic organism is a phytopathogenic bacterium selected from *Xanthomonas spp., Pseudomonas spp., Pantoea spp., Acidovorax spp.* and *Erwinia amylovora;* or
the phytopathogenic organism is tobacco mosaic virus (TMV), or
the phytopathogenic organism is a phytopathogenic green alga, preferably wherein the phytopathogenic green alga is selected from *Cephaleuros spp.*

15. The method of any one of claims 11 to 14, wherein the plant is selected from cereals, fruit plants, nut trees, citrus trees, legumes, tubers, vegetables, cucurbitaceae, oleaginous plants, tobacco, coffee, tea, cocoa, sugar beet, sugar cane, herbs, hops, ginseng, grasses and cotton, preferably wherein:
the cereals are selected from wheat, barley, rye, oats, rice, maize and sorghum;
the fruit plants are selected from almond, apples, avocado, pears, plums, peaches, cherries, bananas, grapes, strawberries, cranberries, apricots, nectarines, kiwis, mangos, pineapples, olives, blueberries and cane berries (e.g. raspberries or blackberries);
the nut trees are selected from pistachio, walnut and pecan;
the citrus trees are selected from oranges, lemons, mandarins and grapefruit;
the legumes are selected from beans, peas, lentils and soybean;
the tubers are selected from potatoes, beets and sugar beets;
the vegetables are selected from leafy greens (e.g. spinach or lettuce), asparagus, celery, brassica (e.g. cabbage, broccoli, cauliflower, Brussels sprouts or mustard), carrots, onions, tomatoes, eggplants, garlic and peppers;
the cucurbitaceae are selected from squash, pumpkins, zucchini, cucumbers, melons and watermelons;
the herbs are selected from chives and dill;
the grass is alfalfa; and
the oleaginous plants are selected from sunflower, rapeseed, canola, peanut, castor and coconut.

## Patentansprüche

1. Wässrige Zusammensetzung zum Bekämpfen einer Pflanzenkrankheit, die durch einen phytopathogenen Organismus verursacht wird, wobei die Zusammensetzung Folgendes umfasst:
(a) Kupferionen, wobei die Kupferionen in einer Menge von etwa 0,5 Gew.-% bis etwa 5 Gew.-%, bezogen auf das Gesamtgewicht der Zusammensetzung, vorhanden sind und die Kupferionen aus einer Quelle stammen, die ausgewählt ist aus Kupferchlorid, Kupferhydroxid, Kupferoxychloridsulfat, Kupfersulfat, basischem Kupfersulfat, Kupfercarbonat, basischem Kupfercarbonat, Kupferoxid, Kupferoxychlorid, Kupferethylendiamintetraessigsäure (EDTA) und Gemischen davon, wobei sich der Begriff "basisches Kupfersulfat", wie er hierin verwendet wird, auf eine Verbindung mit der Formel (Cu₄(OH)₆(SO₄))H₂O bezieht und sich der Begriff "basisches Kupfercarbonat", wie er hierin verwendet wird, auf eine Verbindung mit der Formel Cu₂CO₃(OH)₂ bezieht, vorzugsweise wobei die Quelle der Kupferionen ausgewählt ist aus basischem Kupfersulfat, Kupferhydroxid und basischem Kupfercarbonat;
(b) phosphorige Säure und/oder ein Salz davon; und
ein Alkylamin,
wobei
die phosphorige Säure und/oder ein Salz davon in einer Menge von etwa 22 Gew.-% bis etwa 26 Gew.-% vorhanden ist, und
das Alkylamin Triethylentetramin ist, das in einer Menge von etwa 14 Gew.-% bis weniger als 17 Gew.-% vorhanden ist; oder
die phosphorige Säure und/oder ein Salz davon in einer Menge von etwa 22 Gew.-% bis etwa 26 Gew.-% vorhanden ist, und
das Alkylamin Diethylentriamin ist, das in einer Menge von mehr als 4 Gew.-% und weniger als 21 Gew.-% vorhanden ist, oder
die phosphorige Säure und/oder ein Salz davon in einer Menge von etwa 22 Gew.-% bis etwa 26 Gew.-% vorhanden ist, und
das Alkylamin 1,3-Diaminopropan ist, das in einer Menge von mehr als 7 Gew.-% und weniger als 15 Gew.-% vorhanden ist, oder
wobei
die phosphorige Säure und/oder ein Salz davon in einer Menge von etwa 18 Gew.-% vorhanden ist, und das Alkylamin Ethylendiamin ist, das in einer Menge von etwa 10 Gew.-% bis etwa 15 Gew.-% vorhanden ist, wobei die Zusammensetzung etwa 1 Gew.-% bis etwa 3 Gew.-% Kupferhydroxid umfasst, oder
die phosphorige Säure in einer Menge von etwa 18 Gew.-% vorhanden ist, wobei die Zusammensetzung etwa 2 Gew.-% basisches Kupfercarbonat umfasst,
Alkylamin Triethylentetramin ist, das in einer Menge von etwa 7 Gew.-% oder etwa 14 Gew.-% vorhanden ist, wobei, falls Triethylentetramin in einer Menge von etwa 7 Gew.-% vorhanden ist, dann Kaliumcarbonat in einer Menge von etwa 8 Gew.-% vorhanden ist; oder
die phosphorige Säure in einer Menge von etwa 18 Gew.-% vorhanden ist, wobei die Zusammensetzung etwa 2 Gew.-% basisches Kupfersulfat mit 9 Gew.-% Kaliumcarbonat umfasst,
das Alkylamin 1,3-Diaminopropan ist, das in einer Menge von etwa 11 Gew.-% vorhanden ist; oder die phosphorige Säure in einer Menge von etwa 18 Gew.-% vorhanden ist, wobei die Zusammensetzung etwa 4 Gew.-% basisches Kupfercarbonat umfasst, das Alkylamin 1,3-Diaminopropan ist, das in einer Menge von etwa 11 Gew.-% vorhanden ist; und
wobei der pH-Wert der Zusammensetzung etwa 6 bis etwa 10 beträgt und alle Gew.-% auf das Gesamtgewicht der Zusammensetzung bezogen sind, wobei der Begriff "etwa" +/- 5 % des modifizierten Wertes bedeutet.

2. Zusammensetzung nach Anspruch 1, wobei die Zusammensetzung ein Salz von Phosphorsäure umfasst und das Salz von Phosphorsäure ein Alkalimetallsalz von phosphoriger Säure ist.

3. Zusammensetzung nach Anspruch 2, wobei das Alkalimetallsalz von phosphoriger Säure K₂HPO₃, KNaHPO₃, Na₂HPO₃, KH₂PO₃, NaH₂PO₃ oder Gemische davon ist.

4. Zusammensetzung nach einem der Ansprüche 1 bis 3, wobei:
die phosphorige Säure und/oder das Salz davon in einer Menge von etwa 24 Gew.-%, bezogen auf das Gesamtgewicht der Zusammensetzung, vorhanden ist; und
das Alkylamin 1,3-Diaminopropan ist, das in einer Menge von etwa 10 Gew.-% bis etwa 15 Gew.-%, bezogen auf das Gesamtgewicht der Zusammensetzung, vorhanden ist.

5. Zusammensetzung nach Anspruch 4, wobei das 1,3-Diaminopropan in einer Menge von etwa 13 Gew.-%, bezogen auf das Gesamtgewicht der Zusammensetzung, vorhanden ist.

6. Zusammensetzung nach einem der Ansprüche 1 bis 3, wobei:
die phosphorige Säure und/oder das Salz davon in einer Menge von etwa 24 Gew.-%, bezogen auf das Gesamtgewicht der Zusammensetzung, vorhanden ist; und
das Alkylamin Triethylentetramin ist, das in einer Menge von etwa 14 Gew.-% und weniger als 17 Gew.-%, bezogen auf das Gesamtgewicht der Zusammensetzung, vorhanden ist.

7. Zusammensetzung nach Anspruch 6, wobei das Triethylentetramin in einer Menge von etwa 14 Gew.-%, bezogen auf das Gesamtgewicht der Zusammensetzung, vorhanden ist.

8. Zusammensetzung nach Anspruch 6, wobei die Zusammensetzung ferner etwa 11 Gew.-%, bezogen auf das Gesamtgewicht der Zusammensetzung, Kaliumcarbonat umfasst.

9. Zusammensetzung nach einem der Ansprüche 1 bis 8, wobei:
die phosphorige Säure und/oder das Salz davon in einer Menge von etwa 24 Gew.-%, bezogen auf das Gesamtgewicht der Zusammensetzung, vorhanden ist; und
das Alkylamin Diethylentriamin ist, das in einer Menge von mehr als 7 Gew.-% und weniger als 21 Gew.-%, bezogen auf das Gesamtgewicht der Zusammensetzung, vorhanden ist.

10. Zusammensetzung nach Anspruch 9, wobei das Diethylentriamin in einer Menge von etwa 9 Gew.-%, bezogen auf das Gesamtgewicht der Zusammensetzung, vorhanden ist.

11. Verfahren zum Bekämpfen einer Pflanzenkrankheit, die durch einen phytopathogenen Organismus verursacht wird, wobei das Verfahren Inkontaktbringen einer Pflanze und/oder des Bodens, der die Pflanze umgibt, mit einer wirksamen Menge einer Zusammensetzung wie in einem der Ansprüche 1 bis 10 definiert umfasst.

12. Verfahren nach Anspruch 11, wobei der phytopathogene Organismus ein phytopathogener Pilz, ein phytopathogenes Bakterium, eine phytopathogene Alge oder ein phytopathogenes Virus ist.

13. Verfahren nach Anspruch 12, wobei der phytopathogene Organismus ein phytopathogener Pilz ist, der aus Basidiomycetes, Ascomycetes, Deuteromycetes, Zygomycetes und Oomycetes ausgewählt ist, wobei der phytopathogene Pilz vorzugsweise ausgewählt ist aus *Alternaria spp., Anisogramma anomala, Ascochyta spp., Blumeria graminis, Blumeriella jaapii, Botryosphaeria spp., Botrytis spp., Cercospora spp., Cochliobolus spp., Colletotrichum spp., Cristulariella depraedans, Didymella bryoniae, Elsinoe spp., Erysiphe spp., Fusarium spp., Guignardia spp., Helminthosporium spp., Leptosphaerulina spp., Leveillua taurica, Monilinia spp., Mycosphaerella spp., Neonectria spp., Pseudopeziza spp., Pezicula spp., Phaeosphaeria spp., Phomopsis spp., Phyllachora spp., Podosphaera spp., Sclerotinia spp., Septocyta ruborum, Septoria spp. (Mycosphaerella spp.), Taphrina spp., Ulocladium spp., Venturia spp., Wilsonomyces carophilus, Erythricium spp., Exobasidium spp., Gymnosporangium spp., Hemileia vastatrix, Phoma spp., Phragmidium spp., Rhizoctonia spp., Puccinia spp., Mucor spp., Ustilago spp., Tilletia spp., Uromyces spp., Phakopsora spp., Sphaerotheca spp., Uncinula spp., Rhynchosporium spp., Pyrenophora spp., Cercosporella herpotrichoides, Pyricularia oryzae, Sclerotium spp. (Typhula spp.), Albugo spp., Phytophthora spp., Pythium spp., Plasmopara viticola, Peronospora spp., Pseudoperonospora cubensis, Sclerophthora spp., Spilocaea oleaginea* und *Bremia lactucae.*

14. Verfahren nach Anspruch 12, wobei der phytopathogene Organismus ein phytopathogenes Bakterium ist, das ausgewählt ist aus *Xanthomonas spp., Pseudomonas spp., Pantoea spp., Acidovorax spp.* und *Erwinia amylovora;* oder
der phytopathogene Organismus das Tabakmosaikvirus (TMV) ist, oder
der phytopathogene Organismus eine phytopathogene Grünalge ist, wobei die phytopathogene Grünalge vorzugsweise ausgewählt ist aus *Cephaleuros spp.*

15. Verfahren nach einem der Ansprüche 11 bis 14, wobei die Pflanze ausgewählt ist aus Getreidearten, Obstpflanzen, Nussbäumen, Zitrusbäumen, Hülsenfrüchten, Knollengewächsen, Gemüsearten, Kürbisgewächsen, Ölpflanzen, Tabak, Kaffee, Tee, Kakao, Zuckerrüben, Zuckerrohr, Kräutern, Hopfen, Ginseng, Gräsern und Baumwolle, vorzugsweise wobei:
die Getreidearten ausgewählt sind aus Weizen, Gerste, Roggen, Hafer, Reis, Mais und Sorghum;
die Obstpflanzen ausgewählt sind aus Mandeln, Äpfeln, Avocado, Birnen, Pflaumen, Pfirsichen, Kirschen, Bananen, Trauben, Erdbeeren, Moosbeeren, Aprikosen, Nektarinen, Kiwis, Mangos, Ananas, Oliven, Heidelbeeren und Rubus-Beeren (z. B. Himbeeren oder Brombeeren);
die Nussbäume ausgewählt sind aus Pistazie, Walnuss und Pekannuss;
die Zitrusbäume ausgewählt sind aus Orangen, Zitronen, Mandarinen und Grapefruit;
die Hülsenfrüchte ausgewählt sind aus Bohnen, Erbsen, Linsen und Sojabohnen;
die Knollengewächse ausgewählt sind aus Kartoffeln, Beten und Zuckerrüben;
die Gemüsearten ausgewählt sind aus Blattgemüse (z. B. Spinat oder Salat), Spargel, Sellerie, Kohl (z. B. Kopfkohl, Brokkoli, Blumenkohl, Rosenkohl oder Senf), Karotten, Zwiebeln, Tomaten, Auberginen, Knoblauch und Paprika;
die Kürbisgewächse ausgewählt sind aus Kürbis, Winterkürbis, Zucchini, Gurken, Melonen und Wassermelonen;
die Kräuter ausgewählt sind aus Schnittlauch und Dill ;
das Gras Luzerne ist; und
die Ölpflanzen ausgewählt sind aus Sonnenblume, Raps, Canola, Erdnuss, Rizinus und Kokosnuss.

## Revendications

1. Composition aqueuse destinée à lutter contre une maladie des plantes causée par un organisme phytopathogène, la composition comprenant :
(a) des ions cuivre, les ions cuivre étant présents en une quantité d'environ 0,5 % en poids à environ 5 % en poids, sur la base du poids total de la composition et les ions cuivre provenant d'une source choisie parmi le chlorure de cuivre, l'hydroxyde de cuivre, le sulfate d'oxychlorure de cuivre, le sulfate de cuivre, le sulfate de cuivre basique, le carbonate de cuivre, le carbonate de cuivre basique, l'oxyde de cuivre, l'oxychlorure de cuivre, l'acide éthylènediaminetétraacétique de cuivre (EDTA) et des mélanges de ceux-ci, le terme « sulfate de cuivre basique » tel qu'utilisé ici désignant un composé de formule (Cu₄(OH)₆(SO₄))H₂O, et le terme « carbonate de cuivre basique » tel qu'utilisé ici désignant un composé de formule Cu₂CO₃(OH)₂, de préférence
ladite source des ions cuivre étant choisie parmi le sulfate de cuivre basique, l'hydroxyde de cuivre et le carbonate de cuivre basique ;
(b) de l'acide phosphoreux et/ou un sel de celui-ci ; et
une alkylamine
dans lequel
l'acide phosphoreux et/ou un sel de celui-ci sont présents en une quantité d'environ 22 % en poids à environ 26 % en poids, et
l'alkylamine est la triéthylènetétramine présente en une quantité d'environ 14 % en poids à moins de 17 % en poids ; ou
l'acide phosphoreux et/ou un sel de celui-ci sont présents en une quantité d'environ 22 % en poids à environ 26 % en poids, et
l'alkylamine est la diéthylènetriamine présente en une quantité supérieure à 4 % en poids et inférieure à 21 % en poids, ou
l'acide phosphoreux et/ou un sel de celui-ci sont présents en une quantité d'environ 22 % en poids à environ 26 % en poids, et
l'alkylamine est le 1,3-diaminopropane présent en une quantité supérieure à 7 % en poids et inférieure à 15 % en poids, ou
dans lequel
l'acide phosphoreux et/ou un sel de celui-ci sont présent en une quantité d'environ 18 % en poids, et l'alkylamine est l'éthylènediamine présente en une quantité d'environ 10 % en poids à environ 15 % en poids, ladite composition comprenant environ 1 % en poids à environ 3 % en poids d'hydroxyde de cuivre, ou
l'acide phosphoreux est présent en une quantité d'environ 18 % en poids, ladite composition comprenant environ 2 % en poids de carbonate de cuivre basique, l'alkylamine est la triéthylènetétramine présente en une quantité d'environ 7 % en poids ou d'environ 14 % en poids, si ladite triéthylènetétramine est présente en une quantité d'environ 7 % en poids, alors le carbonate de potassium est présent en une quantité d'environ 8 % en poids ; ou
l'acide phosphoreux est présent en une quantité d'environ 18 % en poids, ladite composition comprenant environ 2 % en poids de sulfate de cuivre basique avec 9 % en poids de carbonate de potassium,
l'alkylamine est le 1,3-diaminopropane présent en une quantité d'environ 11 % en poids ; ou l'acide phosphoreux est présent en une quantité d'environ 18 % en poids, ladite composition comprenant environ 4 % en poids de carbonate de cuivre basique, l'alkylamine est le 1,3-diaminopropane présent en une quantité d'environ 11 % en poids ;
et le pH de la composition est d'environ 6 à environ 10 et tous les % en poids sont basés sur le poids total de la composition, le terme « environ » signifiant +/- 5 % de la valeur modifiée.

2. Composition de la revendication 1, ladite composition comprenant un sel d'acide phosphorique et ledit sel d'acide phosphorique étant un sel de métal alcalin d'acide phosphoreux.

3. Composition de la revendication 2, dans laquelle le sel de métal alcalin d'acide phosphoreux est K₂HPO₃, KNaHPO₃, Na₂HPO₃, KH₂PO₃, NaH₂PO₃ ou des mélanges de ceux-ci.

4. Composition de l'une quelconque des revendications 1 à 3, dans laquelle :
l'acide phosphoreux et/ou le sel de celui-ci sont présents en une quantité d'environ 24 % en poids, sur la base du poids total de la composition ; et
l'alkylamine est le 1,3-diaminopropane présent en une quantité d'environ 10 % en poids à environ 15 % en poids, sur la base du poids total de la composition.

5. Composition de la revendication 4, dans laquelle le 1,3-diaminopropane est présent en une quantité d'environ 13 % en poids, sur la base du poids total de la composition.

6. Composition de l'une quelconque des revendications 1 à 3, dans laquelle :
l'acide phosphoreux et/ou le sel de celui-ci sont présents en une quantité d'environ 24 % en poids, sur la base du poids total de la composition ; et
l'alkylamine est la triéthylènetétramine présente en une quantité d'environ 14 % en poids et inférieure à 17 % en poids, sur la base du poids total de la composition.

7. Composition de la revendication 6, dans laquelle la triéthylènetétramine est présente en une quantité d'environ 14 % en poids, sur la base du poids total de la composition.

8. Composition de la revendication 6, ladite composition comprenant en outre environ 11 % en poids, sur la base du poids total de la composition, de carbonate de potassium.

9. Composition de l'une quelconque des revendications 1 à 8, dans laquelle :
l'acide phosphoreux et/ou le sel de celui-ci sont présents en une quantité d'environ 24 % en poids, sur la base du poids total de la composition ; et
l'alkylamine est la diéthylènetriamine présente en une quantité supérieure à 7 % en poids et inférieure à 21 % en poids, sur la base du poids total de la composition.

10. Composition de la revendication 9, dans laquelle la diéthylènetriamine est présente en une quantité d'environ 9 % en poids, sur la base du poids total de la composition.

11. Procédé destinée à lutter contre une maladie des plantes causée par un organisme phytopathogène, ledit procédé comprenant la mise en contact d'une plante et/ou du sol entourant la plante avec une quantité efficace d'une composition telle que définie dans l'une quelconque des revendications 1 à 10.

12. Procédé de la revendication 11, dans lequel l'organisme phytopathogène est un champignon, une bactérie, une algue ou un virus phytopathogène.

13. Procédé de la revendication 12, dans lequel l'organisme phytopathogène est un champignon phytopathogène choisi parmi les Basidiomycètes, les Ascomycètes, les Deutéromycètes, les Zygomycètes et les Oomycètes, de préférence le champignon phytopathogène étant choisi parmi *Alternaria spp., Anisogramma anomala, Ascochyta spp., Blumeria graminis, Blumeriella jaapii, Botryosphaeria spp., Botrytis spp., Cercospora spp., Cochliobolus spp., Colletotrichum spp., Cristulariella depraedans, Didymella bryoniae, Elsinoe spp., Erysiphe spp., Fusarium spp., Guignardia spp., Helminthosporium spp., Leptosphaerulina spp., Leveillua taurica, Monilinia spp., Mycosphaerella spp., Neonectria spp., Pseudopeziza spp., Pezicula spp., Phaeosphaeria spp., Phomopsis spp., Phyllachora spp., Podosphaera spp., Sclerotinia spp., Septocyta ruborum, Septoria spp. (Mycosphaerella spp.), Taphrina spp., Ulocladium spp., Venturia spp., Wilsonomyces carophilus, Erythricium spp., Exobasidium spp., Gymnosporangium spp., Hemileia vastatrix, Phoma spp., Phragmidium spp., Rhizoctonia spp., Puccinia spp., Mucor spp., Ustilago spp., Tilletia spp., Uromyces spp., Phakopsora spp., Sphaerotheca spp., Uncinula spp., Rhynchosporium spp., Pyrenophora spp., Cercosporella herpotrichoides, Pyricularia oryzae, Sclerotium spp. (Typhula spp.), Albugo spp., Phytophthora spp., Pythium spp., Plasmopara viticola, Peronospora spp., Pseudoperonospora cubensis, Sclerophthora spp., Spilocaea oleaginea* et *Bremia lactucae.*

14. Procédé de la revendication 12, dans lequel l'organisme phytopathogène est une bactérie phytopathogène choisie parmi *Xanthomonas spp., Pseudomonas spp., Pantoea spp., Acidovorax spp.* et *Erwinia amylovora ;* ou
l'organisme phytopathogène est le virus de la mosaïque du tabac (TMV), ou
l'organisme phytopathogène est une algue verte phytopathogène, de préférence ladite algue verte phytopathogène étant choisie parmi *Cephaleuros spp.*

15. Procédé de l'une quelconque des revendications 11 à 14, dans lequel la plante est choisie parmi les céréales, les plantes fruitières, les arbres à fruits à coque, les agrumes, les légumineuses, les tubercules, les légumes, les cucurbitacées, les plantes oléagineuses, le tabac, le café, le thé, le cacao, la betterave sucrière, la canne à sucre, les herbes aromatiques, le houblon, le ginseng, les graminées et le coton, de préférence dans lequel :
les céréales sont choisies parmi le blé, l'orge, le seigle, l'avoine, le riz, le maïs et le sorgho ;
les plantes fruitières sont choisies parmi les amandes, les pommes, les avocats, les poires, les prunes, les pêches, les cerises, les bananes, les raisins, les fraises, les canneberges, les abricots, les nectarines, les kiwis, les mangues, les ananas, les olives, les myrtilles et les baies de cannes (par exemple les framboises ou les mûres) ;
les arbres à fruits à coque sont choisis parmi la pistache, la noix et la noix de pécan ;
les agrumes sont choisis parmi les oranges, les citrons, les mandarines et les pamplemousses ;
les légumineuses sont choisies parmi les haricots, les pois, les lentilles et le soja ;
les tubercules sont choisis parmi les pommes de terre, les betteraves et les betteraves sucrières ;
les légumes sont choisis parmi les légumes-feuilles (par exemple les épinards ou la laitue), les asperges, le céleri, les brassicas (par exemple le chou, le brocoli, le chou-fleur, les choux de Bruxelles ou la moutarde), les carottes, les oignons, les tomates, les aubergines, l'ail et les poivrons ;
les cucurbitacées sont choisies parmi les courges, les citrouilles, les courgettes, les concombres, les melons et les pastèques ;
les herbes aromatiques sont choisies parmi la ciboulette et l'aneth ;
les graminées sont la luzerne ; et
les plantes oléagineuses sont choisies parmi le tournesol, le colza, le canola, l'arachide, le ricin et la noix de coco.
